# EUROPEAN PATENT SPECIFICATION

(11) **EP 1 938 962 B1**
(45) Date of publication and mention of the grant of the patent: **23.04.2014**
(21) Application number: 07024261.5
(22) Date of filing: 14.12.2007
(51) Int. Cl.: B32B 1/06, B65D 75/32

(54) **Reinforcing method and product reinforceable with the reinforcing method**
Verfahren zur Verstärkung und verstärktes Produkt
Méthode de renforcement et produit renforcé

(30) Priority: 14.12.2006 IT MO20060407
(43) Date of publication of application: 02.07.2008
(73) Proprietor: Emilplast S.R.L., 41030 Bomporto (MO) (IT); Palladio Industrie Grafiche Cartotecniche S.P.A., 36031 Dueville (VI) (IT)
(72) Inventor: Pietribiasi, Luigi, 36015 Schio (VI) (IT); Duo', Gianluca, 41038 San Felice sul Panaro (MO) (IT)
(74) Representative: Feltrinelli, Secondo Andrea

(56) References cited:
- WO-A-2005/035386
- WO-A-2005/049313
- WO-A-2007/106901
- GB-A- 2 163 130
- US-A- 4 011 949
- US-A- 4 988 004
- US-A1- 2003 111 379

## Description

The invention relates to a reinforcing method and a product reinforceable with the reinforcing method.

It is common knowledge that many products are put on sale in special packs that comprise a base and a transparent shell in plastic material which is sealed to the base and allows the products to be seen inside the pack.

The transparent shell is normally shaped to follow the outline of the products contained in it while the base of these packs consists of a laminar element, normally made in cardboard, on the sides of which messages and illustrations are printed like, for example, safety warnings, instructions for use of the products and bar codes that have to be scanned by the electronic scanners at the payout tills.

These packs are normally made for hanging on a stand protruding from a display shelf or standing on a display counter and which consists of a thin rod or a straight element shaped like a bracket, substantially horizontal, on which the packs containing the products are inserted.

For this reason the packs, and more specifically the laminar elements that make up the pack bases, have a shaped hole on one end so to allow the insertion of the rod or the straight element.

These packs do have some drawbacks.

A first drawback is that they can be easily tampered with by ill-intentioned people who, squashing the pack, break the laminar base element which has limited mechanical resistance, and take the product out of the pack, pocketing it without paying.

Another drawback is that the shaped holes are normally made near an edge of the pack which, for this reason, results to be even weaker as to its mechanical resistance.

As a result it happens that clumsy handling by users who continuously take packs off their supports and put them back after having looked at them, causes the pack bases to break just where the holes are, making it impossible to hang them on the supports.

To prevent these drawbacks, according to background art, packs have been made with shells that extend so the bases and both sides of them are laminated.

The holes for hanging on the supports are made by simultaneously punching both the bases and the plastic coatings extending from the shells.

However, this state of the art has another drawback which is the high cost of these packs due to the higher quantity of plastic material to be used and because specifically designed machines have to be employed to make these packs.

One object of the invention is to improve the state of the art.

Another object of the invention is to develop a reinforcing method that allows to reinforce the bases of the packs made with materials of the cardboard type.

Another object of the invention is to make a base for packs that allows to form packs which have a high mechanical resistance to handling, limiting their tampering and damaging.

A further object of the invention is to make a base for packs that can be produced with the known machines and normally used to make known packs with cardboard bases without having to make changes to such machines.

According to one aspect of the invention a reinforcing method is provided, suitable for reinforcing the bases of product-containing packs, defining a first face or front face and an opposite second face or rear face, characterised in that it comprises applying at least one reinforcing laminar element to said front face.

According to another aspect of the invention a base is provided, suitable for obtaining product-containing packs, defining a first face or front face and an opposite second face or rear face, characterised in that it comprises at least one reinforcing laminar element applied on said front face.

The reinforcing method and the base therefore allow packs to be made for products that are cheap and which have a mechanical resistance higher than the known packs that comprise bases made with materials of the cardboard type. Further characteristics and advantages of the invention will appear more evident from the description of a preferred but not exclusive embodiment of a reinforcing method and of a base suitable for obtaining product-containing packs, illustrated indicatively by way of non limiting example, in the attached drawings wherein:
Figure 1 is a schematic perspective view of a pack for products comprising a base and a transparent shell applied to the base;

Figure 2 is an interrupted view on an enlarged scale of a longitudinal section of the pack of Figure 1.

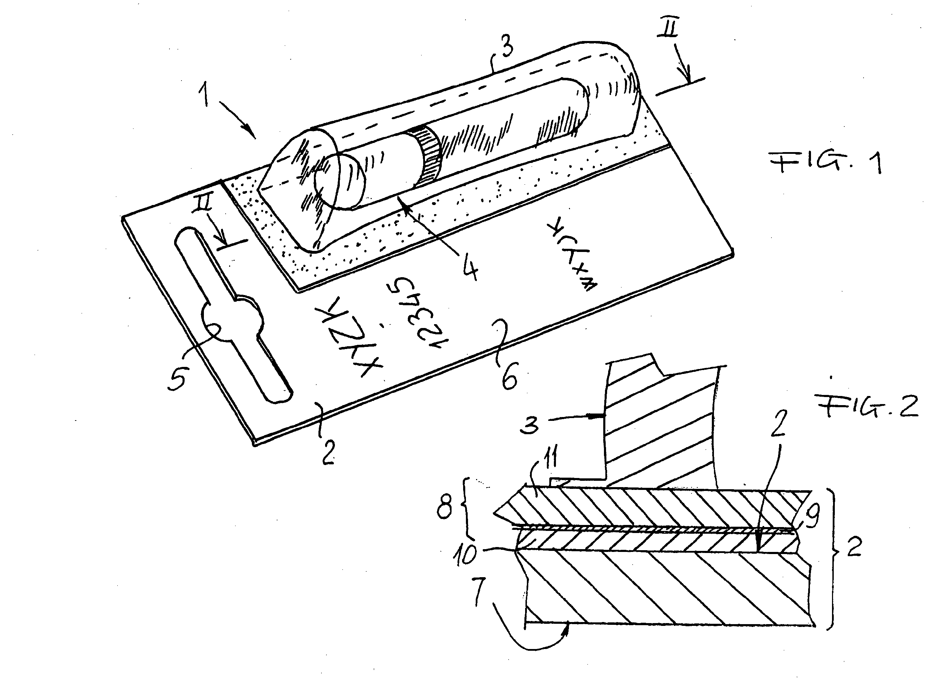

With reference to Figure 1, the reference numeral 1 globally designates a pack for containing products 4 and comprises a base 2 on which a transparent shell 3 in plastic material is applied.

The base 2 is substantially laminar and has a shaped hole 5 at one end to allow the transit of a support of a sales shelf, not illustrated for the sake of simplicity.

With reference to Figure 2 it can be noted that the base 2 defines a first face 6 considered the front and a second face 7 considered the rear.

According to the invention, to the first front face 6 a reinforcing transparent laminar element 8 is applied so it adheres, substantially covering it completely. The reinforcing laminar element 8 comprises a paint/enamel that can be spread on at least said front face 6

The reinforcing laminar element 8 comprises at least one pair of films coupled together with the interposition of a gluing material 9.

A first film 10 is placed in direct contact with the first front face 6 of the base 2 and is fastened to it in a known way, e.g. with an adhesive, while the second film 11, being on top of the latter, is turned towards the outside and more precisely towards the transparent shell 3.

The first film 10 is made in a material chosen from the polyester family and is about 12 thick while the second film is chosen from the polyvinyl chloride family and is about 80 thick.

The reinforcing method comprises the phases of preparing a laminar base 2 of material of the cardboard type, in which at least one transit hole 5 is made for a support.

On a first front face 6 of the laminar base 2 a reinforcing laminar element is then laid and fixed, that comprises two films of plastic material coupled together by means of a gluing material that can be water based or without solvents or with solvents.

The coupled films comprise a first film 10 of polyester and a second film 11 of polyvinyl chloride which are laid on the first front face 6 so that on the second film 11 in polyvinyl chloride the transparent shell 3 can be attached, e.g. by heat sealing.

## Claims

1. Reinforcing method, suitable for reinforcing the bases (2) of product-containing packs (1), said base (2) being substantially laminar, having a shaped hole (5) at one end and defining a first face or front face (6) and an opposite second face or rear face (7), **characterised in that** it comprises applying at least one reinforcing transparent laminar element (8) to said front face (6).

2. Method according to claim 1, wherein said reinforcing element (8) comprises a film of plastic material.

3. Method according to claim 1, wherein said reinforcing laminar element (8) comprises a paint/enamel that can be spread on at least said front face (6).

4. Method according to claim 1, wherein said reinforcing laminar element (8) comprises a first film (10) placed in contact with said first front face (6) and a second film (11) of plastic material on top of said first film (10).

5. Method according to claim 1 or 4, wherein said first film (10) is applied before said second film (11).

6. Method according to claim 1 or 4, wherein said first film (10) and said second film (11) are coupled together with the interposition of a gluing material (9) before said applying.

7. Method according to any of the claims 4 to 6, wherein said first film (10) comprises a polyester film.

8. Method according to any of the claims 4 to 6, wherein said second film (11) comprises a polyvinyl chloride film.

9. Method according to claim 4, wherein said first film (10) has a thickness between 8µ and 80µ.

10. Method according to claim 4, wherein said second film (11) has a thickness between 25µ and 150µ.

11. Method according to claim 9, wherein said first film (10) is about 12µ thick.

12. Method according to claim 10, wherein said second film (11) is about 80µ thick.

13. Method according to claim 4, wherein an adhesive material (9) is placed in between said first film (10) and second film (11).

14. Method according to claim 13, wherein said adhesive material (9) is selected from a water based adhesive, an adhesive without solvents or an adhesive with solvents.

15. Base (2), suitable for obtaining product-containing packs (1), said base (2) being substantially laminar, having a shaped hole (5) at one end and defining a first face or front face (6) and an opposite second face or rear face (7), **characterised in that** it comprises at least one reinforcing transparent laminar element (8) applied on at least said front face (6).

16. Base according to claim 15, wherein said reinforcing element (8) comprises a film of plastic material.

17. Base according to claim 15, wherein said reinforcing laminar element (8) comprises a paint/enamel that can be spread on at least said front face (6).

18. Base according to claim 15, wherein said laminar element (8) comprises a first film (10) placed in contact with said first front face (6) and a second film (11) of plastic material on top of said first film (10).

19. Base according to claim 18, wherein said first film (10) comprises a polyester film.

20. Base according to claim 18, wherein said second film (11) comprises a polyvinyl chloride film.

21. Base according to claim 17, wherein said first film (10) has a thickness between 8 µ and 80 µ.

22. Base according to claim 18, wherein said second film (11) has a thickness between 25 µ and 150 µ.

23. Base according to claim 21, wherein said first film (10) is about 12µ thick.

24. Base according to claim 22, wherein said second film (11) is about 80µ thick.

25. Base according to claim 18, wherein an adhesive material (9) is placed in between said first film (10) and second film (11).

26. Base according to any of the claims 15 to 25, wherein said laminar base (2) is made with material of the cardboard type.

27. Pack (1) for containing products, **characterized in that** it comprises a laminar base (2) according to any of the claims 15 to 25.

## Patentansprüche

1. Verstärkungsverfahren, das sich zum Verstärken der Rückwände (2) von Produktverpackungen (1) eignet, wobei diese Rückwand (2) im Wesentlichen mehrschichtig ist, ein geformtes Loch (5) an einem Ende aufweist und eine erste Seite oder Vorderseite (6) und eine entgegengesetzte zweite Seite oder Rückseite (7) definiert, **dadurch gekennzeichnet, dass** es das Aufbringen von mindestens einem verstärkenden transparenten mehrschichtigen Element (8) auf die Vorderseite (6) umfasst.

2. Verfahren nach Anspruch 1, bei dem das verstärkende Element (8) eine Folie aus Kunststoffmaterial umfasst.

3. Verfahren nach Anspruch 1, bei dem das verstärkende mehrschichtige Element (8) einen Anstrich/Lack umfasst, der auf mindestens die Vorderseite (6) aufgestrichen werden kann.

4. Verfahren nach Anspruch 1, bei dem das verstärkende mehrschichtige Element (8) eine erste Folie (10), die sich in Kontakt mit der ersten Vorderseite (6) befindet, und eine zweite Folie (11) aus Kunststoffmaterial auf der Oberseite dieser ersten Folie (10) umfasst.

5. Verfahren nach Anspruch 1 oder 4, bei dem die erste Folie (10) vor der zweiten Folie (11) angebracht wird.

6. Verfahren nach Anspruch 1 oder 4, bei dem die erste Folie (10) und die zweite Folie (11) unter Einfügen von Verleimungsmaterial (9) vor dem Anbringen miteinander verbunden werden.

7. Verfahren nach einem der Ansprüche von 4 bis 6, bei dem die erste Folie (10) eine Polyesterfolie umfasst.

8. Verfahren nach einem der Ansprüche von 4 bis 6, bei dem die zweite Folie (11) eine Polyvinylchloridfolie umfasst.

9. Verfahren nach Anspruch 4, bei dem die erste Folie (10) eine Dicke zwischen 8µ und 80µ aufweist.

10. Verfahren nach Anspruch 4, bei dem die zweite Folie (11) eine Dicke zwischen 25µ und 150µ aufweist.

11. Verfahren nach Anspruch 9, bei dem die erste Folie (10) eine Dicke von ungefähr 12µ aufweist.

12. Verfahren nach Anspruch 10, bei dem die zweite Folie (11) eine Dicke von ungefähr 80µ aufweist.

13. Verfahren nach Anspruch 4, bei dem ein Klebematerial (9) zwischen die erste Folie (10) und die zweite Folie (11) eingefügt wird.

14. Verfahren nach Anspruch 13, bei dem das Klebematerial (9) aus einem wasserbasierten Klebstoff, einem Klebstoff ohne Lösemittel oder einem Klebstoff mit Lösemitteln ausgewählt ist.

15. Rückwand (2), die sich zum Erhalten von Produktverpackungen (1) eignet, wobei diese Rückwand (2) im Wesentlichen mehrschichtig ist, ein geformtes Loch (5) an einem Ende aufweist und eine erste Seite oder Vorderseite (6) und eine entgegengesetzte zweite Seite oder Rückseite (7) definiert, **dadurch gekennzeichnet, dass** sie mindestens ein verstärkendes transparentes mehrschichtiges Element (8) umfasst, das auf mindestens die Vorderseite (6) aufgebracht ist.

16. Rückwand nach Anspruch 15, wobei das verstärkende Element (8) eine Folie aus Kunststoffmaterial umfasst.

17. Rückwand nach Anspruch 15, wobei das verstärkende mehrschichtige Element (8) einen Anstrich/Lack umfasst, der auf mindestens die Vorderseite (6) aufgestrichen werden kann.

18. Rückwand nach Anspruch 15, wobei das mehrschichtige Element (8) eine erste Folie (10), die sich in Kontakt mit der ersten Vorderseite (6) befindet, und eine zweite Folie (11) aus Kunststoffmaterial auf der Oberseite dieser ersten Folie (10) umfasst.

19. Rückwand nach Anspruch 18, wobei die erste Folie (10) eine Polyesterfolie umfasst.

20. Rückwand nach Anspruch 18, wobei die zweite Folie (11) eine Polyvinylchloridfolie umfasst.

21. Rückwand nach Anspruch 17, wobei die erste Folie (10) eine Dicke zwischen 8µ und 80µ aufweist.

22. Rückwand nach Anspruch 18, wobei die zweite Folie (11) eine Dicke zwischen 25µ und 150µ aufweist.

23. Rückwand nach Anspruch 21, wobei die erste Folie (10) eine Dicke von ungefähr 12µ aufweist.

24. Rückwand nach Anspruch 22, wobei die zweite Folie (11) eine Dicke von ungefähr 80µ aufweist.

25. Rückwand nach Anspruch 18, wobei ein Klebematerial (9) zwischen die erste Folie (10) und die zweite Folie (11) eingefügt ist.

26. Rückwand nach einem der Ansprüche von 15 bis 25, wobei die mehrschichtige Rückwand (2) aus Material vom Typ Karton besteht.

27. Produktverpackung (1), **dadurch gekennzeichnet, dass** sie eine mehrschichtige Rückwand (2) nach einem der Ansprüche von 15 bis 25 umfasst.

## Revendications

1. Procédé de renforcement, adapté pour renforcer les bases (2) d'emballages conteneurs de produits (1), ladite base (2) étant sensiblement lamellaire, ayant un trou profilé (5) à une extrémité et définissant une première face ou face frontale (6) et une deuxième face opposée ou face postérieure (7), **caractérisé en ce qu'**il comprend l'application d'au moins un élément lamellaire transparent de renforcement (8) sur ladite face frontale (6).

2. Procédé selon la revendication 1, dans lequel ledit élément de renforcement (8) comprend un film de matière plastique.

3. Procédé selon la revendication 1, dans lequel ledit élément lamellaire de renforcement (8) comprend une peinture/émail qui peut être étalée sur au moins ladite face frontale (6).

4. Procédé selon la revendication 1, dans lequel ledit élément lamellaire de renforcement (8) comprend un premier film (10) placé en contact avec ladite première face frontale (6) et un deuxième film (11) de matière plastique sur le dessus dudit premier film (10).

5. Procédé selon la revendication 1 ou 4, dans lequel ledit premier film (10) est appliqué avant ledit deuxième film (11).

6. Procédé selon la revendication 1 ou 4, dans lequel ledit premier film (10) et ledit deuxième film (11) sont accouplés entre eux avec interposition d'une matière collante (9) avant ladite application.

7. Procédé selon l'une quelconque des revendications 4 à 6, dans lequel ledit premier film (10) comprend un film de polyester.

8. Procédé selon l'une quelconque des revendications 4 à 6, dans lequel ledit deuxième film (11) comprend un film de chlorure de polyvinyle.

9. Procédé selon la revendication 4, dans lequel ledit premier film (10) a une épaisseur entre 8µ et 80µ.

10. Procédé selon la revendication 4, dans lequel ledit deuxième film (11) a une épaisseur entre 25µ et 150µ.

11. Procédé selon la revendication 9, dans lequel ledit premier film (10) a une épaisseur d'environ 12µ.

12. Procédé selon la revendication 10, dans lequel ledit deuxième film (11) a une épaisseur d'environ 80µ.

13. Procédé selon la revendication 4, dans lequel une matière adhésive (9) est placée entre ledit premier film (10) et ledit deuxième film (11).

14. Procédé selon la revendication 13, dans lequel ladite matière adhésive (9) est sélectionnée parmi un adhésif à base d'eau, un adhésif sans solvants ou un adhésif avec solvants.

15. Base (2), adaptée pour obtenir des emballages conteneurs de produits (1), ladite base (2) étant sensiblement lamellaire, ayant un trou profilé (5) à une extrémité et définissant une première face ou face frontale (6) et une deuxième face opposée ou face postérieure (7), **caractérisé en ce qu'**il comprend l'application d'au moins un élément lamellaire transparent de renforcement (8) sur au moins ladite face frontale (6).

16. Base selon la revendication 15, dans laquelle ledit élément de renforcement (8) comprend un film de matière plastique.

17. Base selon la revendication 15, dans laquelle ledit élément lamellaire de renforcement (8) comprend une peinture/émail qui peut être étalée sur au moins ladite face frontale (6).

18. Base selon la revendication 15, dans laquelle ledit élément lamellaire (8) comprend un premier film (10) placé en contact avec ladite première face frontale (6) et un deuxième film (11) de matière plastique sur le dessus dudit premier film (10).

19. Base selon la revendication 18, dans laquelle ledit premier film (10) comprend un film de polyester.

20. Base selon la revendication 18, dans laquelle ledit deuxième film (11) comprend un film de chlorure de polyvinyle.

21. Base selon la revendication 17, dans laquelle ledit premier film (10) a une épaisseur entre 8µ et 80µ.

22. Base selon la revendication 18, dans laquelle ledit deuxième film (11) a une épaisseur entre 25µ et 150µ.

23. Base selon la revendication 21, dans laquelle ledit premier film (10) a une épaisseur d'environ 12µ.

24. Base selon la revendication 22, dans laquelle ledit deuxième film (11) a une épaisseur d'environ 80µ.

25. Base selon la revendication 18, dans laquelle une matière adhésive (9) est placée entre ledit premier film (10) et ledit deuxième film (11).

26. Base selon l'une quelconque des revendications 15 à 25, dans laquelle ladite base lamellaire (2) est réalisée avec un matériau du type carton.

27. Emballage (1) pour contenir des produits, **caractérisé en ce qu'**il comprend une base lamellaire (2) selon l'une quelconque des revendications 15 à 25.
